# EUROPEAN PATENT SPECIFICATION

(11) **EP 2 332 406 B1**
(45) Date of publication and mention of the grant of the patent: **06.11.2013**
(21) Application number: 10174461.3
(22) Date of filing: 30.08.2010
(51) Int. Cl.: A01K 63/04

(54) **Fully automatic water pumping external filter for aquaculture water treatment**
Vollautomatischer externer Wasserzirkulationsfilter für die Aquakultur-Wasserbehandlung
Filtre externe à circulation d'eau entièrement automatique pour traitement d'eau d'aquaculture

(30) Priority: 09.12.2009 CN 200910260806
(43) Date of publication of application: 15.06.2011
(73) Proprietor: Wu, Biaoning, Zhongshan City Guangdong 528400 (CN); Zhongshan City Cumei Electric Appliance Co., Ltd., Yongning Industrial Avenue, Xiaolan Town Zhongshan City, Guangdong 528415 (CN)
(72) Inventor: Wu, Biaoning, Zhongshan City Guangdong 528400 (CN)
(74) Representative: Johansson, Lars E.

(56) References cited:
- EP-A1- 1 677 008
- EP-A1- 1 832 164
- US-B1- 6 187 179

## Description

The present invention discloses a fully automatic water pumping external filter for aquaculture water treatment, comprising a filter bucket and a cover. Several filter layers and a water pump are installed inside the filter bucket, and an inlet and an outlet pipe are installed in the cover, wherein the outlet pipe is connected to the outlet of the water pump, and has a valve installed, wherein the proposed filter comprises a seal connection between the described filter bucket and cover, and the vacuum pump is installed inside the filter bucket exhausting the air from the filter bucket, according to the preamble of independent claim 1. The water filter proposed by the present invention adopts such a structure, in which no manual air or water pumping is required to form the water circulation filtration, it is fully automatic, novel and easy to operate.

### Technology Field

The present invention relates to a type of water filters, in particular a type of automatic external water filters for water filtration treatment in ornamental fish culture.

### Background Art

Nowadays many people enjoy culturing aquatic animals and plants with some instruments, e.g. aquarium, at home or work place for a decorative purpose or to release working pressure. During the cultivation process the treatment of aquaculture water is necessary as to remain a suitable water environment for the growth of aquatic animals and plants, thus many types of filters for a purpose of aquaculture water treatment have emerged in market. However, for conventional external water filters, manual vacuum pumping or water pumping is required at the beginning of each time of water processing as the water pumps installed in these conventional water filters require a specific water level to start working; this is a significant drawback causing inconveniences for filter operation, see for instance document US 6 187 179 B1. Thus, an automatic water filter, which can operate without manual air or water pumping, is proposed by the present invention.

### Summary of the Invention

To overcome the shortcomings of existing technology, the present invention provides a type of fully automatic filters, according to claim 1, which can operate without manual air and water pumping.

The technological solution proposed by the present invention is described as following paragraphs.

The automatic external water filter proposed by the present invention comprises a filter bucket and a cover. The filter or filters and a water pump are installed inside the filter bucket, and an inlet and an outlet pipe are mounted in the cover, of which the inlet pipe extends to the bottom of the filter bucket. In addition, the outlet pipe is connected to the outlet of the water pump, and has a valve installed. It is characterized by the seal connection between the described filter bucket and cover, and a vacuum pump installed inside the filter bucket to extract the air from the filter bucket.

As a preferred implementation method, the inlet of vacuum pump and the outlet pipe are connected, the described valve is installed on the outlet pipe and between the connection end of the outlet of vacuum pump and the outlet pipe, and the connection end of the outlet pipe and the outlet of water pump.

As an improvement to the implementation method described above, a bactericidal lamp or bactericidal lamps is installed inside the filter bucket to sterilize the water pumped into the filter bucket through the intake pipe.

The filtration arrangement inside the filter bucket includes a ceramic ring filter layer, a coarse layer, an activated carbon filter layer, and a fine filter layer from down to up, in addition to above, other common types of filtration arrangements can be used here as well.

The beneficial outcomes of the present invention include: when the system starts the vacuum pump exhausts the air in the filter bucket to generate and retain a certain pressure difference between inside and outside the filter bucket, to absorb the water from the aquarium. When the water in the filter bucket reaches the level where the pump can operate the pump starts to work and the vacuum pump turns off. The water flows circularly in the inlet pipe, the water pump and outlet pipe, and is therefore purified by the filter(s) in the filter bucket. The water filter proposed by the present invention adopts such a structure, where no manual air or water pumping is required to form the water circulation, it is fully automatic, novel, and easy to operate.

### Preferred Imbodiment of the Invention

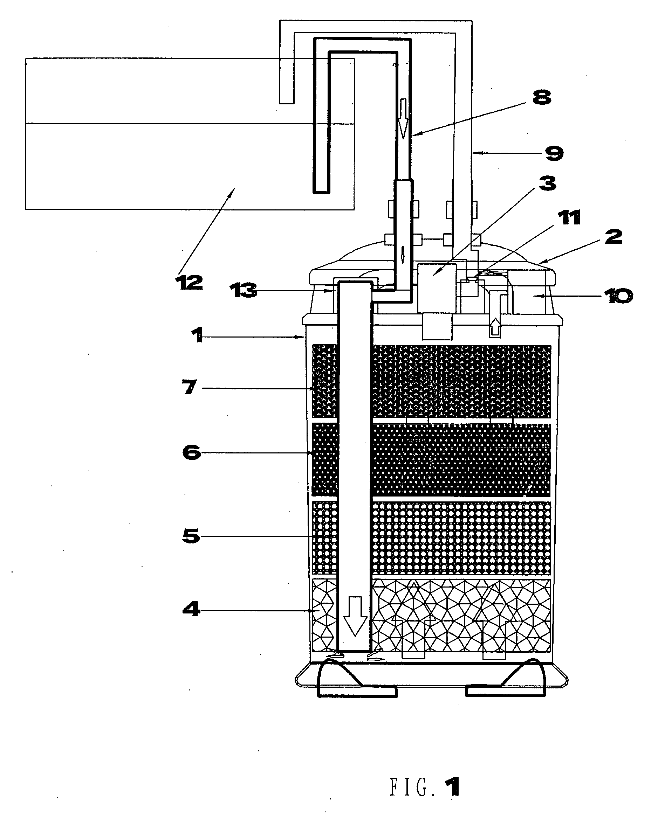

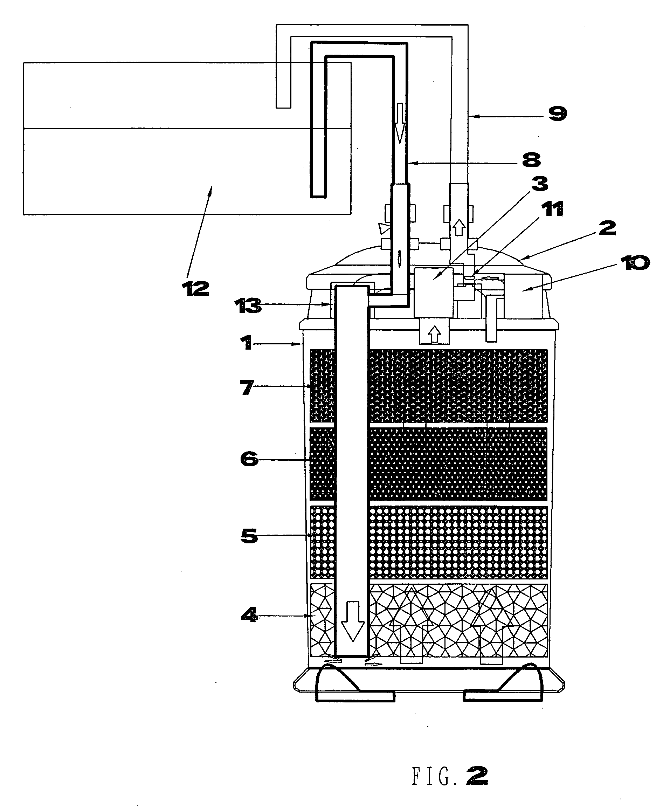

Illustrated by Figure 1 and Figure 2, the present invention discloses an automatic water pumping external water filter, comprising a filtering bucket 1 and a cover 2, the filters and the water pump 3 are installed inside the filter bucket l, as the figure shows, the multiple-layer filtration structure adopted by the present implementation method comprises a ceramic ring filter layer 4 , a coarse layer 5 , an activated carbon filter layer 6 , and a fine filter layer 7 from down to up, in addition to above, other types of filtration structures can be used here as well. The inlet pipe 8 and outlet pipe 9 are installed in the cover 2, of which the inlet pipe 8 extends to the bottom of the filter bucket, and the outlet pipe 9 is connected to the outlet of the water pump 3. The filter bucket 1 and the cover 2 are hermetically connected; the vacuum pump 10 is installed inside the filter bucket 1 to exhaust the air in the filter bucket 1. The inlet of vacuum pump 10 is connected to the outlet pipe 9; the valve 11 is installed on the outlet pipe 9 between the connection end of the outlet of vacuum pump 10 and the outlet pipe 9, and the connection end of the outlet pipe 9 and the outlet of water pump 3.

The working principle of the present invention could be describes as: the inlet pipe 8 is immersed into the water in the aquarium 12 during the system operation as the figure shows. When system starts, the vacuum pump 10 turns on to exhaust the air in the filter bucket 1 to generate and maintain a certain air pressure difference between inside and outside the filter bucket 1, and meanwhile the valve 11 is closed, thus under the effect of atmospheric pressure, the water in aquarium 12 start flowing into the filter bucket 1. Under the control by a water level controller installed inside the filter bucket 1, when the water reaches a specific level where the water pump 3 can operate, the valve 11 opens up, the vacuum pump 10 turns off, and the water pumps 3 starts pumping water from the aquarium 12 to the filter bucket 1. The water flows circularly in the inlet pipe 8, the water pump 3 and outlet pipe 9, and is therefore purified by the filters 4, 5, 6 and 7 in the filter bucket.

As will be appreciated by one skilled in the art, the present invention should be not restricted to the implantation method described and illustrated above; there are many other practical possibilities to realize the present invention, e.g. the outlet of the vacuum pump could be connected to the atmospheric environment directly. Any similar technical means used to achieve the technical effects of the present invention should be in the protection range of the present invention, as defined in the appended claims.

## Claims

1. A fully automatic water pumping external filter, comprising a filter bucket (1) and a cover (2), wherein a filter or filters and a water pump (3) are installed inside the filter bucket (1), and an inlet pipe (8) and an outlet pipe (9) are installed in the cover (2), said outlet pipe (9) being connected to the outlet of the water pump (3), and having a valve (11) installed; a seal connection between said filter bucket (1) and cover (2), and a vacuum pump (10) installed inside the filter bucket (1) to exhaust air from the filter bucket (1), **characterized by** a water level controller mounted in the filter bucket (1) arranged to control said vacuum pump (10) and said water pump (3), and by having said inlet pipe (8) extending to the bottom of the filter bucket (1).

2. A fully automatic water pumping external filter according to claim 1, **characterized in that** the inlet of said vacuum pump (10) and the outlet pipe (9) are connected, wherein said valve (11) is installed on the outlet pipe (9) between the connection end of the outlet of vacuum pump (10) and said outlet pipe (9), and the connection end of the outlet pipe (9) and the outlet of the water pump (3).

3. A fully automatic water pumping external filter according to claim 1, **characterized in that** a bactericidal lamp or bactericidal lamps (13) is installed inside the filter bucket (1) arranged to sterilize the water flowing into the filter bucket (1) through the inlet pipe (8).

4. A fully automatic water pumping external filter according to claim 1, **characterized in that** the filtration arrangement inside the filter bucket (1) comprises a ceramic ring filter layer (4), a coarse layer (5), an activated carbon filter layer (6), and a fine filter layer (7) from down to up.

## Patentansprüche

1. Vollautomatischer externer Wasserpumpenfilter, umfassend ein Filtergehäuse (1) und eine Abdeckung (2), wobei ein Filter oder Filter und eine Wasserpumpe (3) in dem Filtergehäuse (1) installiert sind, und ein Einlassrohr (8) und ein Auslassrohr (9) in der Abdeckung (2) installiert sind, wobei das Auslassrohr (9) mit dem Auslass der Wasserpumpe (3) verbunden ist, und ein installiertes Ventil (11) aufweist, eine Dichtverbindung zwischen dem Filtergehäuse (1) und der Abdeckung (2), und eine Vakuumpumpe (10), die in dem Filtergehäuse (1) installiert ist, um Luft aus dem Filtergehäuse (1) abzusaugen, **gekennzeichnet durch** eine Wasserpegelsteuerung, die in dem Filtergehäuse (1) angebracht ist, die eingerichtet ist, die Vakuumpumpe (10) und die Wasserpumpe (3) zu steuern, und **dadurch**, dass das Einlassrohr (8) sich zur Unterseite des Filtergehäuses (1) erstreckt.

2. Vollautomatischer externer Wasserpumpenfilter nach Anspruch 1, **dadurch gekennzeichnet, dass** der Einlass der Vakuumpumpe (10) und das Auslassrohr (9) verbunden sind, wobei das Ventil (11) an dem Auslassrohr (9) zwischen dem Verbindungsende des Auslasses der Vakuumpumpe (10) und des Auslassrohrs (9) und dem Verbindungsende des Auslassrohrs (9) und des Auslasses der Wasserpumpe (3) installiert ist.

3. Vollautomatischer externer Wasserpumpenfilter nach Anspruch 1, **dadurch gekennzeichnet, dass** eine bakterizide Lampe oder bakterizide Lampen (13) in dem Filtergehäuse (1) installiert ist beziehungsweise sind, dazu eingerichtet, das Wasser zu sterilisieren, dass durch das Einlassrohr (8) in das Filtergehäuse (1) fließt.

4. Vollautomatischer externer Wasserpumpenfilter nach Anspruch 1, **dadurch gekennzeichnet, dass** die Filteranordnung in dem Filtergehäuse (1) von unten nach oben eine keramische Ringfilterlage (4), eine Groblage (5), eine Aktivkohlefilter-Lage (6) und eine Feinfilterlage (7) umfasst.

## Revendications

1. Un filtre externe de pompage d'eau entièrement automatique, comprenant un bac à filtre (1) et un couvercle (2), un filtre ou des filtres et une pompe à eau (3) étant placés à l'intérieur du bac à filtre (1), et un tuyau d'entrée (8) et un tuyau de sortie (9) étant placés dans le couvercle (2), ledit tuyau de sortie (9) étant relié à la sortie de la pompe à eau (3), et comportant une soupape installée (11), une connexion étanche entre ledit bac litre (1) et le couvercle (2), et une pompe vide (10) placée à l'intérieur du bac filtre (1) pour évacuer de l'air depuis le bac à filtre (1), **caractérisé par** un régulateur de niveau d'eau monté dans le bac à filtre (1) agencé pour commander ladite pompe à vide (10) et ladite pompe à eau (3) et par le fait que ledit tuyau d'entrée (8) s'étend vers le fond du bac à filtre (1).

2. Un filtre externe de pompage d'eau entièrement automatique selon la revendication 1,
**caractérisé en ce que** l'entrée de ladite pompe à vide (10) et le tuyau de sortie (9) sont reliés, ladite soupape (11) étant installée sur le tuyau de sortie (9) entre l'extrémité de accordement de la sortie de la pompe à vide (10) et ledit tuyau de sortie (9), et l'extrémité de raccordement du tuyau de sortie (9) et la sortie de la pompe eau (3).

3. Un filtre externe de pompage d'eau entièrement automatique selon la revendication 1,
**caractérisé en ce qu'**une lampe bactéricide ou des lampes bactéricides (13) sont installées à l'intérieur du bac à filtre (1) en étant agencées de manière à stériliser l'eau qui s'écoule dans le bac à filtre (1) depuis le tuyau d'entrée (8).

4. Un filtre externe de pompage d'eau entièrement automatique selon la revendication 1,
**caractérisé en ce que** le dispositif de filtration situé à l'intérieur du bac à filtre (1) comprend, de bas en haut, une couche filtrante annulaire (4) en céramique, une couche (5) à gros grain, une couche filtrante (6) de charbon actif et une couche filtrante fine (7).
